# EUROPÄISCHE PATENTANMELDUNG

(11) **EP 0 818 289 A2**
(43) Veröffentlichungstag der Anmeldung: **14.01.1998**
(21) Anmeldenummer: 97111624.9
(22) Anmeldetag: 09.07.1997
(51) Int. Cl.: B29B 11/16, B29C 70/24, B29C 70/30

(54) **Kraftflussgerechter, multiaxialer mehrlagiger Faservorformling mit zumindest bereichsweiser Z-Achsen-Verstärkung und ein Verfahren zu seiner Herstellung**

(30) Priorität: 13.07.1996 DE 19628388
(71) Anmelder: Institut für Polymerforschung Dresden e.V., 01069 Dresden (DE)
(72) Erfinder: Gliesche, Konrad, 01465 Langebrück (DE); Rothe, Horst, Dr., 01069 Dresden (DE); Feltin, Dirk, 01069 Dresden (DE)
(74) Vertreter: Rauschenbach, Marion, Dipl.-Ing.

(57) **Zusammenfassung**

Die Erfindung bezieht sich auf die Gebiete der technischen Textilien und betrifft einen Faservorformling mit zumindest bereichsweiser Z-Achsen-Verstärkung, wie er z.B. als Faserverstärkung in hochbeanspruchten Faserverbund-Bauteilen , eingesetzt wird, und ein Verfahren zu seiner Herstellung.

Der Erfindung liegt die Aufgabe zugrunde, einen kraftflußgerechten, multiaxialen, mehrlagigen Faservorformling mit zumindest bereichsweiser Z-Achsen-Verstärkung anzugeben und ein Verfahren zu seiner Herstellung.

Bei dem erfindungsgemäßen kraftflußgerechten, multiaxialen, mehrlagigen Faservorformling mit zumindest bereichsweiser Z-Achsen-Verstärkung (8) sind kraftflußgerecht angeordnete Verstärkungsfasern in X- und Y-Richtung auf einer Trägerlage (10) mittels Sticken in mehreren Lagen übereinander angeordnet, und eine zumindest bereichsweise Z-Achsen-Verstärkung (8) ist entsprechend dem Kraftfluß in Richtung der Z-Achse durch Verstärkungsfäden mittels Sticken angeordnet.

Weiterhin wird ein Faservorformling mit zumindest bereichsweiser Z-Achsen-Verstärkung hergestellt, indem Verstärkungsfäden in X- und Y-Richtung und zur Z-Achsen-Verstärkung entsprechend dem Kraftfluß in Richtung der Z-Achse Verstärkungsfäden dimensioniert, verlegt und mittels Sticken eingebracht werden.

## Beschreibung

Die Erfindung bezieht sich auf die Gebiete der technischen Textilien und betrifft einen kraftflußgerechten, multiaxialen, mehrlagigen Faservorformling mit zumindest bereichsweiser Z-Achsen-Verstärkung, wie er z.B. als Faserverstärkung in hochbeanspruchten Faserverbund-Bauteilen (Composite-Bauteilen), eingesetzt wird die z.B. in Flugzeugen, Fahrzeugen, Sportgeräten oder dynamisch hochbeanspruchten Maschinenelementen verwendet werden können, und ein Verfahren zu seiner Herstellung.

Der in Verbindung mit Werkstoffen verwendete Begriff "Faser" (z.B. Faserverstärkung, Faserverbund) steht für den Oberbegriff "Faserstoff" und umfaßt also auch die "Filamente" genannten endlosen Fasern. Die in Vorformlingen (preforms) und Halbzeugen enthaltenen Verstärkungsfasern werden üblicherweise technologisch als Spinnfäden, Roving, Garn oder Zwirn verarbeitet. In Verbindung mit Verfahren zu deren Herstellung ist hierfür allgemein der Begriff "Faden" üblich, z.B. Kettfaden, Nähfaden, Verstärkungsfaden.

Der Fachsprache entsprechend bestehen Verbunde aus mehreren "Schichten", und die Faservorformlinge zu deren Herstellung, werden aus mehreren "Lagen" aufgebaut.

Bekannt sind multiaxiale Verstärkungsgebilde in Form von Gelegen oder Geweben sowie anderen textilen Halbzeugen, bei denen die Verstärkungsfäden lagenweise in jeweils konstanter Richtung angeordnet sind. Dabei ist festzustellen, daß damit nur eine geringe Ausnutzung der mechanischen Eigenschaften der Verstärkungsfasern erreicht werden kann, da eine Anpassung an den tatsächlichen Kraftlinienverlauf im fertigen Faserverbundbauteil nur in eingeschränktem Maße möglich ist. In einem Verbundwerkstoff nehmen Verstärkungsfäden optimal Kräfte nur auf, wenn sie in Kraftrichtung angeordnet sind. Es wurde festgestellt, daß bereits eine Abweichung zwischen dem Verlauf der Kraftlinien und der Verstärkungsfäden von 5 ° zu einem Festigkeitsverlust von 50 % führt. Somit wird die Festigkeit der Verstärkungsfäden bei diesen bekannten Verstärkungsgebilden üblicherweise nur zu einem geringen Teil ausgenutzt.

Nachdem mathematische Methoden bekannt geworden waren, nach denen der Kraftlinienverlauf in einem beanspruchten Bauteil ermittelt werden kann, wurde versucht, eine Anpassung bei den Verstärkungsgebilden an den tatsächlichen Kraftlinienverlauf zu erreichen.

Nach der EP 93106037 sind formbare multiaxiale Verstärkungsgebilde bekannt, bei denen die Verstärkungsfäden entsprechend dem Verlauf der Kraftlinien im Bauteil angeordnet werden können, auch mehrfach übereinander. Diese Lagen von Verstärkungsfäden, die in der X-Y-Ebene dem Kraftlinienverlauf folgen, sind in einem daraus gefertigten Bauteil bezüglich der Z-Richtung aber nur durch die Matrix miteinander verbunden. Bei mechanischen Belastungen des Bauteils kann es deshalb zur Schichtentrennung (Delaminierung) kommen. Somit ist eine zusätzliche Verstärkung dieser multiaxialen Verstärkungsgebilde in Z-Richtung erforderlich.

Dieses Problem der Schichtentrennung besteht auch für Faserverbunde aus Geweben und Gelegen, und es sind hierfür Versuche unternommen worden, eine Verstärkung in Z-Richtung zu erreichen. Dabei werden verschiedene Methoden angewandt. Im wesentlichen werden die mehreren übereinander angeordneten Verstärkungslagen mit Verstärkungsfäden, -fasern oder -borsten miteinander verbunden. Dies kann auf unterschiedliche Weise geschehen.
Entweder durch spezielle Webtechniken, wie mehrlagiges Weben mit Bindekette oder Anbindung, orthogonales Weben, 3D-Weben mit abgestufter Dicke oder mehrlagiges Rundweben.
Oder auch dadurch, daß Verstärkungsfäden in vorher angelegte Kanäle eingefädelt werden.
Oder daß Verstärkungsfasern in mit Harz getränkte Rovings am Aufwickelpunkt injiziert werden.
Oder durch das Eindrücken von Verstärkungsborsten in übereinandergeschichtete Verstärkungslagen mit Hilfe eines Schaumstoffes, der dann thermisch entfernt wird.
Oder aber durch das Zusammennähen von gestapelten Verstärkungslagen oder das Aufnähen von Verstärkungsteilen auf andere.

Alle diese Methoden haben den Nachteil, daß sie entweder an eine spezielle Fertigungstechnologie gebunden sind oder daß eine Z-Achsen-Verstärkung nur über die gesamte Fläche möglich ist.

Der Erfindung liegt die Aufgabe zugrunde, einen kraftflußgerechten, multiaxialen, mehrlagigen Faservorformling mit zumindest bereichsweiser Z-Achsen-Verstärkung anzugeben, dessen Z-Achsen-Verstärkung nur an ausgewählten Stellen entsprechend den Kraftlinienverläufen vorhanden ist und ein Verfahren zu seiner Herstellung.

Die Aufgabe wird durch die in den Ansprüchen angegebenen Erfindung gelöst.

Bei dem erfindungsgemäßen kraftflußgerechten, multiaxialen, mehrlagigen Faservorformling mit zumindest bereichsweiser Z-Achsen-Verstärkung zur Herstellung von hochbeanspruchten Faserverbund-Bauteilen sind kraftflußgerecht angeordnete Verstärkungsfasern in X- und Y-Richtung auf einer Trägerlage mittels Sticken in mehreren Lagen übereinander angeordnet, und eine zumindest bereichsweise Z-Achsen-Verstärkung ist entsprechend dem Kraftfluß in Richtung der Z-Achse durch Verstärkungsfäden mittels Sticken angeordnet.

Vorteilhafterweise bestehen die Verstärkungsfäden für die Z-Achsen-Verstärkung aus aromatischen Polyamidfasern, Glas- oder Carbonfasern, pflanzlichen Naturfasern.

Es ist auch günstig, wenn die Verstärkungsfäden aus pflanzlichen Naturfasern aus Flachs, Hanf und Ramie bestehen.

Weiterhin wird ein kraftflußgerechter, multiaxialer, mehrlagiger Faservorformling mit zumindest bereichsweiser Z-Achsen-Verstärkung hergestellt, indem Verstärkungsfäden in X- und Y-Richtung kraftflußgerecht dimensioniert, verlegt und mittels Sticken auf einer Trägerlage befestigt werden und indem zur Z-Achsen-Verstärkung entsprechend dem Kraftfluß in Richtung der Z-Achse Verstärkungsfäden dimensioniert, verlegt und mittels Sticken eingebracht werden.

Zweckmäßig ist es, daß zur Z-Achsen-Verstärkung beim Sticken der Verstärkungsfaden als Oberfaden eingesetzt wird.

Eine weitere Variante des erfindungsgemäßen Verfahrens besteht darin, daß zur Z-Achsen-Verstärkung beim Sticken der als Oberfaden eingesetzte Verstärkungsfaden mit dem Unterfaden unterhalb der Trägerlage verschlungen wird.

Vorteile ergeben sich auch, wenn bei der Z-Achsen-Verstärkung beim Sticken die Verschlingung des Ober- und Unterfadens außerhalb des Faservorformlings durchgeführt wird.

Durch die erfindungsgemäße Lösung wird es erstmals möglich, eine definierte Verstärkung in Richtung der Z-Achse hinsichtlich Art, Anteil und Positionierung der Verstärkungsfäden zu erreichen.
Da im fertigen Faserverbund nur ein maximaler Anteil an Verstärkungsfäden oder - fasern enthalten sein kann, wird durch die nach dem Stand der Technik versuchte Z-Achsen-Verstärkung ein vergleichsweise hoher Prozentsatz an Verstärkungsfäden für die Z-Achsen-Verstärkung verwendet, um den dann die Verstärkung in der X/Y-Ebene vermindert ist.

Nach der erfindungsgemäßen Lösung wird es möglich, den Anteil an Verstärkungsfäden in Z-Richtung auf den notwendigen Anteil zu beschränken, da nunmehr eine Z-Achsen-Verstärkung nur dort vorgenommen werden braucht, wo die Anforderungen an das Bauteil dies erfordern. Damit läßt sich ein optimaler Anteil an Verstärkungsfäden in der X/Y-Ebene erreichen. Die Festigkeit des Bauteils insgesamt und insbesondere an den Z-Achsen-verstärkten Stellen wird dadurch erhöht.

Weiterhin wird durch die kraftflußgerechte, multiaxiale, mehrlagige Verstärkung in der X/Y-Ebene, ergänzt durch die Z-Achsen-Verstärkung an "kritischen Stellen", der Widerstand gegen interlaminare Rißausbreitung und die Resistenz gegenüber Delaminierungen infolge Impact-Einwirkungen verbessert.

Der erfindungsgemäß hergestellte, erfindungsgemäße Faservorformling wird nach seiner Fertigstellung in bekannter Weise mit einem Duromer imprägniert (z.B. mit Epoxidharz im Harzinjektionsverfahren) und es wird somit ein langfaserverstärktes Duromer-Bauteil hergestellt.
Beim Einsatz von Thermoplastmatrix z.B. Polyamid, Polypropylen, Polyimid, wird in bekannter Weise der Thermoplast, der in Form von Filamenten, Folie oder Teilchen im Faserverbund vorliegen kann, durch Aufheizen über den Schmelzpunkt des Thermoplast und gleichzeitigem Pressen ein langfaserverstärktes Thermoplast-Bauteil hergestellt.

Ein weiterer Vorteil des erfindungsgemäßen Verfahrens besteht darin, daß eine near-net-shape-Produktion möglich ist, die aber keine neue Verarbeitungstechnologie erfordert. Durch die Herstellung des erfindungsgemäßen Faservorformlings entfallen z.B. solche bisher notwendigen technologischen Schritte, wie das Zuschneiden und Stapeln der Lagen, und es entsteht sehr wenig Abfall.
Außerdem kann die Produktion bei minimalem Materialeinsatz durch maximale Ausnutzung der Verstärkungsfäden erfolgen, d.h. ein extremer Leichtbau ist möglich.

Im weiteren wird die Erfindung an einem Ausführungsbeispiel erläutert.
Fig. 1 zeigt das Legemuster einer Zug/Druck-Strebe ohne Z-Achsen-Verstärkung
Fig. 2 zeigt den Halbschnitt des Vorformlinges für eine Zug/Druck-Strebe mit Z-Achsen-Verstärkung in schematischer Darstellung

Für eine Zug/Druck-Strebe, bei der die Kraftübertragung durch eine Aussparung über einen Bolzen erfolgt, wurde nach dem bekannten FEM-Verfahren (Finite-Elemente-Methode) eine Spannungsanalyse durchgeführt. Entsprechend dieser Spannungsanalyse und dem zukünftigen Bauteileinsatzgebiet wird die Art der Verstärkungsfäden ausgewählt und die Dimensionierung und Legung der Verstärkungsfäden berechnet, d.h. es wird ein "Legemuster" entworfen.

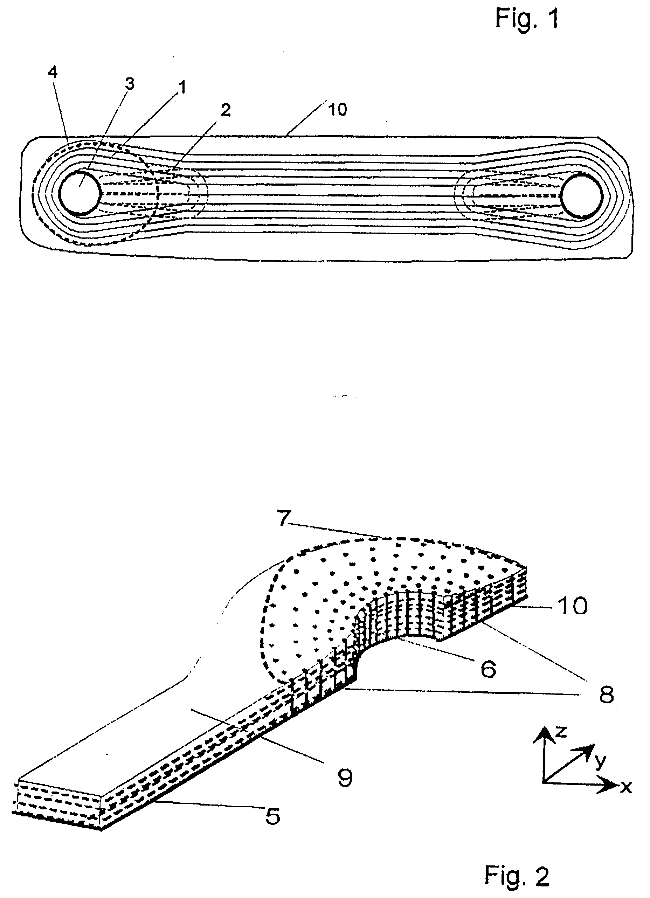

Für eine Zug/Druck-Strebe ohne Z-Achsen-Verstärkung (Stand der Technik) werden die Verstärkungsfäden aus Glasfasern entsprechend diesem "Legemuster" nach Fig. 1 gelegt und mittels Sticken auf einem Vlies aus Polyester als Trägerlage 10 fixiert. Dabei wird der Verlauf der Verstärkungsfäden nach den zu erwartenden Zugbelastungen 1 und Druckbelastungen 2 in der X/Y-Ebene ausgerichtet. Die um die Bohrung 3 im Bereich 4 auftretenden Zugkräfte in Z-Richtung können nicht berücksichtigt werden.

Für eine Zug/Druck-Strebe mit Z-Achsen-Verstärkung werden auf einem Vlies aus Polyester als Trägerlage 10 die Verstärkungsfäden aus Glasfasern entsprechend dem "Legemuster" nach Fig. 1 gelegt und mittels Sticken auf dem Vlies fixiert. Dadurch entsteht ein in X/Y-Richtung kraftflußgerechtes, multiaxiales, mehrlagiges Verstärkungsgebilde. In dem Bereich 9 des fertigen Bauteiles treten nur Zug- und Druckbelastungen 5 in der X/Y-Ebene auf, so daß dort die Legung der Verstärkungsfäden entsprechend Fig. 1 erfolgt. Im Bereich 7 um die Bohrung 6 treten auch Zugkräfte in der Z-Richtung auf. Die Verstärkung in Z-Richtung 8 wird erreicht durch das Einbringen von Fäden aus aromatischem Polyamid in Z-Richtung, indem als Oberfaden beim Sticken ein Faden aus aromatischem Polyamid verwendet wird. Dabei werden in der Nähe der Bohrung 6 die Abstände zwischen den Stickstichen kürzer gewählt als in größerer Entfernung von der Bohrung 6 im Bereich 7 um die Bohrung 6. Beim anschließenden Tränken dieses Z-Achsen-verstärkten Faservorformlinges mit Epoxidharz erfolgt die Verbindung zwischen den mehreren Lagen.

Eine derart hergestellte Zug/Druck-Strebe mit Z-Achsen-Verstärkung zeigt eine Erhöhung der Festigkeit in Z-Richtung um den Faktor 2. Damit wird die Belastbarkeit des Loches in der Zug/Druck-Strebe um das 1,5-fache erhöht.

## Patentansprüche

1. Kraftflußgerechter, multiaxialer, mehrlagiger Faservorformling mit zumindest bereichsweiser Z-Achsen-Verstärkung zur Herstellung von hochbeanspruchten Faserverbund-Bauteilen, bei denen kraftflußgerecht angeordnete Verstärkungsfasern in X- und Y-Richtung auf einer Trägerlage mittels Sticken in mehreren Lagen übereinander angeordnet sind, und eine zumindest bereichsweise Z-Achsen-Verstärkung entsprechend dem Kraftfluß in Richtung der Z-Achse durch Verstärkungsfäden mittels Sticken angeordnet ist.

2. Faservorformling nach Anspruch 1, bei dem die Verstärkungsfäden für die Z-Achsen-Verstärkung aus aromatischen Polyamidfasern, Glas- oder Carbonfasern, pflanzlichen Naturfasern bestehen.

3. Faservorformling nach Anspruch 2, bei dem die Verstärkungsfäden aus pflanzlichen Naturfasern aus Flachs, Hanf und Ramie bestehen.

4. Verfahren zur Herstellung eines kraftflußgerechten, multiaxialen, mehrlagigen Faservorformlings mit zumindest bereichsweiser Z-Achsen-Verstärkung bei dem Verstärkungsfäden in X- und Y-Richtung kraftflußgerecht dimensioniert, verlegt und mittels Sticken auf einer Trägerlage befestigt werden und bei dem zur Z-Achsen-Verstärkung entsprechend dem Kraftfluß in Richtung der Z-Achse Verstärkungsfäden dimensioniert, verlegt und mittels Sticken eingebracht werden.

5. Verfahren nach Anspruch 4, bei dem zur Z-Achsen-Verstärkung beim Sticken der Verstärkungsfaden als Oberfaden eingesetzt wird.

6. Verfahren nach Anspruch 5, bei dem zur Z-Achsen-Verstärkung beim Sticken der als Oberfaden eingesetzte Verstärkungsfaden mit dem Unterfaden unterhalb der Trägerlage verschlungen wird.

7. Verfahren nach Anspruch 4, bei dem bei der Z-Achsen-Verstärkung beim Sticken die Verschlingung des Ober- und Unterfadens außerhalb des Faservorformlings durchgeführt wird.
